Europäisches Patentamt

European Patent Office

Office européen des brevets

(19)

(11) Publication number: **0 339 907**

**A1**

(12) # EUROPEAN PATENT APPLICATION

(21) Application number: 89304059.2

(51) Int. Cl.⁴: **C02F 3/08**

(22) Date of filing: 24.04.89

(30) Priority: 25.04.88 CS 2797/88

(43) Date of publication of application:
02.11.89 Bulletin 89/44

(84) Designated Contracting States:
AT BE CH DE FR GB IT LI NL SE

(71) Applicant: **Agrochemicky podnik Spolecny zemedelsky podnik pro specializovane sluzby v rostlinne vyrobe**

**CS-252 61 Jenec okres Praha-zapad(CS)**

(72) Inventor: **Bidenko, Ivan, CSc**
**No. 150 Leninova**
**Praha 6(CS)**
Inventor: **Koutecky, Vlastimil**
**Brnovska 80**
**Praha 5(CS)**

(74) Representative: **Griffin, Kenneth David et al**
**Saunders & Dolleymore 9, Rickmansworth Road**
**Watford Hertfordshire WD1 7HE(GB)**

(54) **Arrangement for the cleaning of waste water.**

(57) In the arrangement cleaning of waste water is achieved by rotating tubular biocontactors (6) open at both ends wound on a rotating cylindrical frame (2, 4, 5) adapted to be alternately submerged below and raised above the level of the waste water, combining thereby the effect of cleaning by biocontact and of efficient aeration of the waste water.

FIG. 1

EP 0 339 907 A1

## ARRANGEMENT FOR THE CLEANING OF WASTE WATER

The invention relates to an arrangement for the cleaning of waste water by the use of rotating biocontactors.

Known arrangements for the cleaning of waste water are based on the principle of rotating biodisks and use alternate submerging of disks with adhering functional bioculture into waste water and its subsequent emerging, securing thus its contact with air. A drawback of such cleaning arrangements is the low amount of oxygen introduced into the waste water which is not supposed to be used for aeration and the oxygenation of water has been solely accomplished by submerging into the waste water or biocontactor prior to exposure to air. A consequence thereof is a rather insufficient cleaning by the suspended culture, as the introduced amount of oxygen does not correspond to optimum cleaning conditions. Known water cleaning stations of this kind do not use recirculation of the mixture of water and sludge within the space of the biological tank, the consequences of which are unfavourable hydraulic conditions. It is also known that biodisk cleaning stations cannot secure cleaning of water by floccules torn-off from the disk surface although that is the most active action of the grown film. An increase of the contact surface, that is of the diameter and of the number of disks leads to an increase of the size of the cleaning station and of its actual operation and costs.

It is an object of this invention to eliminate to a substantial extend the mentioned drawbacks and to provide a water cleaning station which would operate more efficiently than known stations of this kind. According to this invention face plates are fixed near both ends of a rotatable shaft situated in a tank, which plates are near their circumference interconnected by longitudinal supporting bars, supporting individual biocontactors, formed by tubes wound on said supporting bars in such a manner that both open ends of each tube point in the direction of rotation of the shaft.

Embodiments of an arrangement for waste water cleaning according to this invention are shown diagrammatically in the accompanying drawings, in which:

Fig. 1 is an overall axonometric view of one arrangement,

Fig. 2 shows a side view of the rotatable part of the arrangement indicating how staggered inlets and outlets of biocontactors are arranged,

Fig. 3 is an axonometric view of a tubular biocontactor made of plastics, and

Fig. 4 a similar view of another embodiment of a tubular biocontactor.

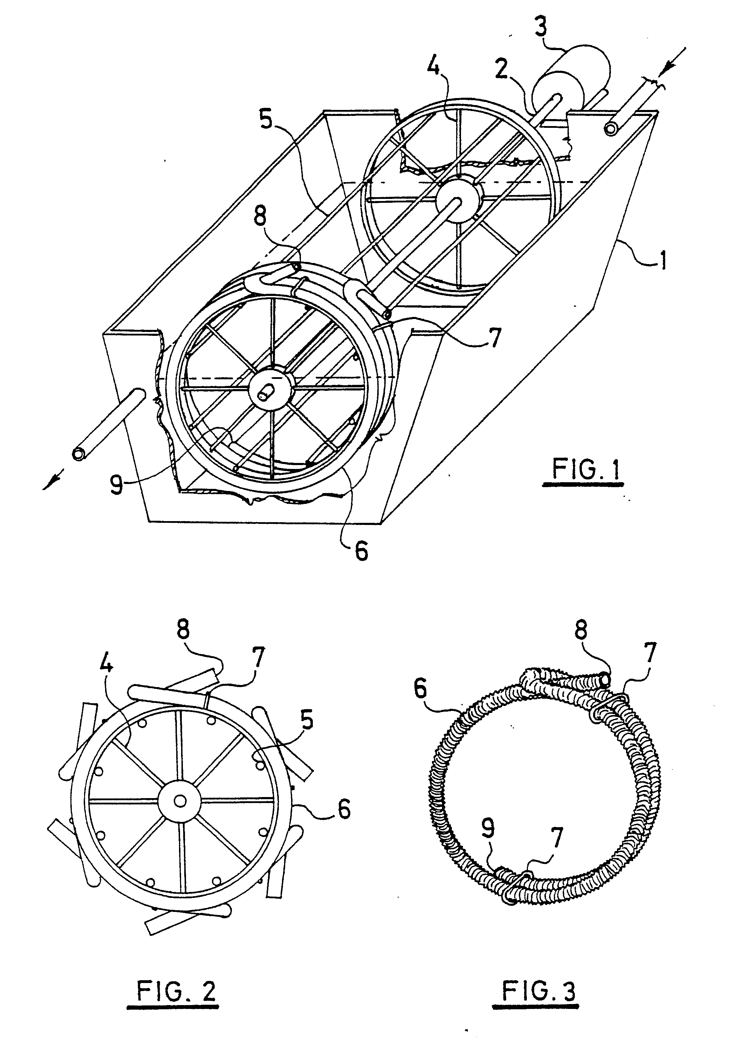

With reference to Fig. 1 the arrangement comprises a biological tank 1 in which a shaft 2 is supported, rotable by a drive 3 formed for instance by an electric motor with a gear system. On the rotatable shaft 2 near each of its both ends within the tank 1 is fixed a wheel or face plate 4. The face plates 4 are interconnected by longitudinal supporting bars 5, whereby a cylindrical frame is formed around which individual tubular biocontactors 6 are wound. Each biocontactor 6 is wound in such a way, that its first end provided with an inlet opening 8 points in the direction of rotation of the shaft 2, while the remaining part of the tube forming the biocontactor 6 encompasses the supporting bars 5, forms a turn and a loop near the inlet end 8 of the biocontactor 6, which is at this place fixed to one of the bars 5 by a clamp 7, whereafter the tube proceeds in the opposite direction on the supporting bars 5 to form at least a part of a turn and terminates at its second end with an outlet opening 9 which again points in the direction of rotation of the shaft 2. The biocontactor 6 is near the second end 9 again fixed to one of the bars 5 by a clamp 7. Both the ends of the tubular biocontactor 6 remain open.

The arrangement operates such that the shaft 2 takes along the face plates 4 and the longitudinal bars 5, around which a number of tubular biocontactors is wound. By slow rotation of the biocontactors 6 in the biological tank 1 which is partly filled with waste water so that parts of biocontactors 6 are above the level of the waste water so that the inlet opening 8 of each tubular biocontactor 6 becomes alternately flooded and in the course of continuing rotation the internal space of the tubular biocontactor 6 is filled with waste water. When the inlet opening 8 rises above the waste water level, the waste water within it flows to the lower part of the biocontactor 6 and its internal space starts to be filled with air (or by some gas if the operation takes place in another medium) until the inlet opening 8 of the biocontactor 6 again comes in contact with the waste water level. In the course of the following rotation air is enclosed in a part of the tubular biocontactor 6 between two liquid columns and the originally entered liquid is forced to flow around the loop around the inlet opening 8 and is in the direction of rotation of the shaft 2 leaving the biocontactor 6 through the outlet opening 9. Air enclosed inside the biocontactor 6 is also forced into the liquid, causing an intensive aeration of the liquid in the tank 1. Individual biocontactors 6 are so wound that their inlet openings 8 and outlet openings 9 are staggered so that the electric motor of the drive 3 is uniformly stressed and particularly air is uniformly introduced into the liquid within the tank 1 so that an intensive and uniform aeration is accomplished. In the course of this operation an increased pressure is generated within the tubular biocontactors 6 causing an increased transfer of oxygen into the biological film, increasing thus the efficiency of biological water cleaning. The arrangement enables recirculation of waste water and of the suspension from different parts of the biological tank 1 to other parts thereof. This is determined by the spacing of the inlet openings 8 from the outlet openings 9 of biocontactors 6 wound on the longitudinal bars 5. Hydrodynamic conditions in the tank 1 and the cleaning effect of the arrangement are thus substantially improved.

Fig. 2 shows a side view on the rotatable part of the arrangement with a number of tubular biocontactors 6 wound around the longitudinal bars 5 interconnecting the face walls 4. The inlet openings 8 and outlet openings 9 of the individual tubes of biocontactors 6 are uniformly distributed along the circumference of the face plates 4 in order to provide a uniform and effective aeration of the content of the tank 1 and a uniform stress of the driving motor.

Fig. 3 is an axonometric view of a tubular biocontactor 6 made of plastics of similar shape as in Fig. 1.

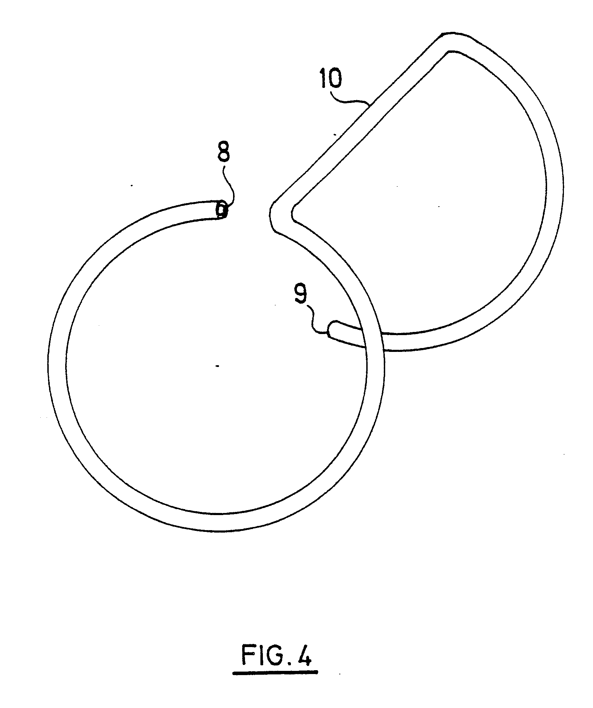

Fig. 4 is an axonometric view of an alternative form of a tubular biocontactor 6 where partial turns of the biocontactor 6 are connected by a tubular part which is substantially parallel to the axis of the shaft 2 (not shown).

The arrangement according to the invention offers a number of advantages over presently used biocontactors in the shape of biodisks, the major advantage consisting in that no costly and inefficient biological disks need be used, whereby a substantially higher efficiency of cleaning is obtained.

Another advantage is the high amount of oxygen introduced into the waste water at low energetic requirements. The high oxygenating capacity contributes to the improved efficiency of cleaning by means of a torn-off biological film and floccules in suspension and also by the simultaneous increased introduction of oxygen into the biological film in the internal space due to overpressure within the tubes. By the rotation of the shaft an improved mixing of the content of the biological tank is achieved. Another advantage is the possibility of recirculation of the mixture of water and sludge in any part of the biological tank. Due to removal of biodisks the arrangement enables a substantial reduction of the size of the cleaning arrangement, a reduction of the weight of rotating parts and thus of the whole cleaning arrangement with simultaneous reduction of energatic requirements. Due to a substantial increase of the efficiency of the cleaning arrangement the actual costs and costs of the cleaning operation are reduced.

The arrangement for cleaning of waste water according to this invention is suitable for application particularly for smaller or one-family houses, recreation buildings, industrial and agricultural establishments with primarily sewage pollution.

**Claims**

1. Arrangement for the cleaning of waste water comprising a biological tank (1) within which a shaft (2), is rotatably supported, the arrangement including means for rotation of the shaft, characterised in that face plates (4), are fixed near both ends of the shaft (2) which are interconnected by longitudinal bars (5), a number of tubular biocontactors (6) being wound coaxially with the shaft (2) around said longitudinal bars (5), both ends of each tubular biocontactor (6) remaining open, the inlet openings (8) of each tubular biocontactor (6) pointing in the direction of rotation of the shaft (2), a part of the tube of a biocontactor (6) forming at least a part of a turn around the longitudinal bars (5), whereafter the tube is bent so that its following part forms at least a part of a turn in the opposite direction with its outlet opening (9) pointing again in the direction of rotation of the shaft (2), the biological tank (1) being filled with waste water, such that parts of biocontactors (6) remain above the level of the waste water.

2. Arrangement according to Claim 1, characterised in that the tube of each tubular biocontactor (6) forms a complete turn around the longitudinal bars (5) to be subsequently bent around its inlet end (8) to form a loop and forming subsequently at least a part of a turn in the opposite direction than the first turn of said tube.

3. Arrangement according to Claim 1, characterised in that the tube of the tubular biocontactor (6) forms first at least a part of a turn around the longitudinal bars (5), the following part thereof is bent to extend in the axial direction of the shaft (2) to be thereafter bent to form at least a part of a turn around the longitudinal bars (5) in the opposite direction than the first turn of the tube.

FIG. 1

FIG. 2

FIG. 3

S 11 165

8

10

9

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 235 090  (H. HARTMANN)<br>* Page 3, lines 17-32; figure 1 * | 1 | C 02 F   3/08 |
| Y | WO-A-8 100 101  (A. FRANDSEN)<br>* Page 1, lines 1-15; page 4, line 31 - page 5, line 15; figure 1 * | 1 | |
| A | EP-A-0 198 451  (GRABOWSKI TROPFKÖRPER - TECHNIK GmbH)<br>* Column 4, line 16 - column 5, line 47 * | 1-3 | |

TECHNICAL FIELDS SEARCHED (Int. Cl.4)

C 02 F

The present search report has been drawn up for all claims

| Place of search | Date of completion of the search | Examiner |
|---|---|---|
| THE HAGUE | 19-07-1989 | GONZALEZ Y ARIAS M.L. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)